# FASCICULE DE BREVET EUROPEEN

(11) **EP 2 364 911 B1**
(45) Date de publication et mention de la délivrance du brevet: **14.08.2013**
(21) Numéro de dépôt: 11000521.2
(22) Date de dépôt: 24.01.2011
(51) Int. Cl.: B64D 37/00, B67D 7/42

(54) **Dispositif de remplissage d'un réservoir par gravité ou sous pression**
Vorrichtung zur Druck- und Schwerkraftbetankung
Pressure and gravity filling device

(30) Priorité: 28.01.2010 FR 1000326
(43) Date de publication de la demande: 14.09.2011
(73) Titulaire: EUROCOPTER, 13725 Marignane Cédex (FR); Quinson, 92000 Nanterre (FR)
(72) Inventeur: Carmona, Elodie, 13090 Aix en Provence (FR); Gruyat, Jean-Louis, 13700 Marignane (FR); Courtes, Frédéric, 92000 Nanterre (FR)
(74) Mandataire: GPI & Associés

(56) Documents cités:
- DE-U1-202006 006 249
- FR-A- 1 604 551
- FR-A1- 2 302 930

## Description

La présente invention concerne un dispositif de remplissage d'un réservoir par gravité ou sous pression.

En effet, un aéronef et notamment un giravion de type hélicoptère comprend usuellement un moyen de remplissage par gravité afin de remplir un réservoir à l'aide de moyens rudimentaires, un simple tuyau par exemple.

Les moyens de remplissage par gravité respectent par exemple la norme connue sous la dénomination STANAG 3212. Classiquement, un moyen de remplissage par gravité comporte un conduit d'entrée débouchant sur une crépine pour éviter de remplir le réservoir avec des polluants de toutes sortes.

L'inconvénient d'un remplissage par gravité réside notamment par la durée du remplissage, qui est de fait relativement élevée.

En parallèle, le système carburant est optionnellement pourvu d'un moyen de remplissage sous pression, pourvu par exemple d'un accrocheur selon la norme connue sous la dénomination ISO 45. Le document FR 2 226 603 présente une valve de remplissage sous pression munie d'un solénoïde permettant son ouverture.

Un moyen d'approvisionnement de fluide sous pression, un camion citerne par exemple, est alors relié au moyen de remplissage sous pression par un volant d'accrochage pour remplir très rapidement le réservoir.

La valve de remplissage sous pression peut comporter un moyen de commande de fin de remplissage mécanique ne nécessitant pas la mise sous tension électrique de l'aéronef, ou un moyen de commande de fin de remplissage électrique impliquant une telle mise sous tension.

En outre, en accord avec le document US 4 328 844, une valve de remplissage sous pression peut aussi autoriser une vidange rapide de carburant.

Ainsi, en fonction des équipements requis, un aéronef peut comporter uniquement un moyen de remplissage par gravité, un moyen de remplissage par gravité et une valve de remplissage sous pression pourvue d'un moyen de commande de fin de remplissage mécanique ou encore un moyen de remplissage par gravité et une valve de remplissage sous pression pourvue d'un moyen de commande de fin de remplissage électrique.

Pour couvrir ces trois différentes options, il convient de prévoir trois versions différentes de l'aéronef induisant de fait des coûts et difficultés importantes.

Le document US 5 289 900 présente un moyen de remplissage d'un réservoir de lubrification muni d'un premier orifice de remplissage par gravité et d'un deuxième orifice de remplissage sous pression. De plus, le moyen de remplissage possède un orifice de vidange permettant d'évacuer un trop plein de liquide.

Dès lors, le moyen de remplissage selon ce document US 5 289 900 autorise un débit de fuite en cas de trop plein mais n'arrête pas le remplissage de manière mécanique ou électrique.

Il est à noter que le document FR2 302 930 A1 présente un moyen de remplissage muni d'un corps remplissant le rôle d'embase de remplissage par gravité et d'un sous - ensemble permettant un remplissage sous pression.

La présente invention a alors pour objet de proposer un dispositif de remplissage universel d'un réservoir permettant de couvrir les trois options possibles.

Le dispositif de remplissage est telle que décrit par les revendications.

Selon l'invention, un dispositif de remplissage pour remplir un réservoir indifféremment par gravité ou sous pression muni d'une embase de remplissage par gravité comportant une canalisation creuse est remarquable en ce qu'il comporte une embase de remplissage sous pression insérée et fixée de manière réversible dans l'embase de remplissage par gravité, à savoir au sein de cette embase de remplissage par gravité.

L'embase de remplissage sous pression comporte un moyen de commande de fin de remplissage qui coopère avec une prise de pression de l'embase de remplissage par gravité lorsque l'embase de remplissage sous pression est fixée à l'embase de remplissage par gravité.

Le moyen de commande peut alors mettre fin à un remplissage à l'instant requis. Il est à noter que la prise de pression peut être obturée mécaniquement ou électriquement selon le mode de réalisation.

Dès lors, le dispositif de remplissage est un dispositif universel m'impliquant pas la mise en place d'une pluralité de variantes.

En effet, si l'utilisateur ne souhaite pas procéder à un remplissage sous pression, il lui suffit de ne pas implémenter l'embase de remplissage sous pression dans l'embase de remplissage par gravité. De plus, on verra que l'embase de remplissage sous pression peut interrompre le remplissage aussi bien via un ordre électrique que par une cinématique hydromécanique.

L'aéronef est alors conçu pour un unique dispositif de remplissage totalement adaptable aux souhaits de l'utilisateur.

Ce dispositif de remplissage peut aussi posséder une ou plusieurs des caractéristiques suivantes.

Ainsi, selon un aspect de l'invention, l'embase de remplissage sous pression comportant un raccord de connexion conforme aux normes en vigueur apte à être verrouillé à un volant d'accrochage en appliquant un premier couple de serrage, un moyen de solidarisation du dispositif comporte au moins une baïonnette qui coopère avec une gorge et un moyen de pression élastique pour fixer de manière réversible l'embase de remplissage sous pression à l'embase de remplissage par gravité en appliquant un second couple de serrage supérieur audit premier couple.

Par suite, le moyen de solidarisation empêche par exemple une désolidarisation indue des embases de remplissage par gravité et sous pression lorsqu'un opérateur déconnecte la citerne de remplissage du raccord de connexion de l'embase de remplissage sous pression.

Le premier couple de serrage étant défini par les normes à respecter, on comprend que le deuxième couple est parfaitement défini. Ainsi, on choisit éventuellement un deuxième couple égal au premier couple multiplié par une marge de sécurité, de l'ordre de 10% par exemple.

Optionnellement, la baïonnette étant solidarisée à une face externe de l'embase de remplissage sous pression, la gorge étant ménagée sur une face interne de l'embase de remplissage par gravité en regard de ladite face externe, le moyen de pression élastique bloque la baïonnette dans une zone de retenue de la gorge.

De plus, le dispositif comportant une chambre d'entrée par laquelle un fluide pénètre dans l'embase de remplissage sous pression lors d'une phase de remplissage, ledit dispositif est pourvu d'une chambre intermédiaire séparée de ladite chambre d'entrée par une paroi fixe, la paroi fixe comportant un orifice de remplissage reliant la chambre d'entrée et la chambre intermédiaire, la chambre intermédiaire étant munie d'au moins un canal de remplissage apte à diriger le fluide vers un réservoir, l'embase de remplissage sous pression étant pourvue d'un moyen de commande pour obturer l'orifice de remplissage à l'issue d'une phase de remplissage sous pression. Ainsi, l'embase de remplissage sous pression est pourvue d'un moyen de commande autorisant une liaison hydraulique entre la chambre d'entrée et la chambre intermédiaire durant une phase de remplissage sous pression via l'orifice de remplissage et isolant hydrauliquement la chambre d'entrée de la chambre intermédiaire en obturant cet orifice de remplissage à l'issue de cette phase de remplissage.

Pour permettre le remplissage du réservoir, le moyen de commande n'entrave pas la communication hydraulique entre la chambre d'entrée et la chambre intermédiaire. Par contre, lorsque le niveau de fluide dans le réservoir a atteint un niveau prédéterminé, le moyen de commande empêche le fluide de passer de la chambre d'entrée vers la chambre intermédiaire. Le fluide ne peut alors plus se déverser dans le réservoir via le ou les canaux de remplissage.

Il est concevable que le moyen de commande soit muni d'une chambre de commande liée en permanence avec la chambre d'entrée via un premier orifice de commande ménagé dans la paroi fixe qui coopère avec une tige creuse qui est mobile dans la chambre intermédiaire.

Il est à noter que le premier orifice de commande peut être une partie de l'orifice de remplissage ou être physiquement séparé de l'orifice de remplissage suivant la variante.

La tige creuse fait partie d'un piston apte à effectuer une translation pour obturer l'orifice de remplissage afin d'empêcher un fluide de passer de la chambre d'entrée vers la chambre intermédiaire. A l'inverse, on note que ce fluide provenant de la chambre d'entrée pénètre dans la tige creuse indépendamment de la position de cette tige creuse pour alimenter la chambre de commande.

Selon une variante, une première extrémité de la tige creuse est pourvue d'une première tête et une deuxième extrémité de la tige creuse est munie d'une deuxième tête.

En fonction de la position de la tige creuse, la première tête peut isoler la chambre d'entrée de la chambre intermédiaire en obturant l'orifice de remplissage entre la chambre d'entrée et la chambre intermédiaire. Par contre, la première tête comprend un deuxième orifice de commande coopérant avec le premier orifice de commande pour permettre une liaison hydraulique permanente entre la chambre d'entrée et la tige creuse. Par exemple, la première tête est un disque perpendiculaire à un axe longitudinal de la tige creuse.

La deuxième tête sépare hydrauliquement la chambre de commande de la chambre intermédiaire qu'elle que soit la position de la tige creuse mobile. Toutefois, la deuxième tête comprend un troisième orifice de commande mettant en relation la tige creuse et la chambre de commande.

En outre, l'embase de remplissage sous pression peut comprendre un moyen élastique de rappel tendant à plaquer la première tête contre la paroi fixe pour obturer l'orifice de remplissage.

Optionnellement, l'embase de remplissage sous pression comprend un canal de fuite apte à relier hydrauliquement la chambre de commande à une prise de pression de l'embase par gravité lorsque l'embase de remplissage sous pression est fixée à l'embase de remplissage par gravité.

Selon une réalisation mécanique, le dispositif peut comprendre un tuyau débouchant sur un détecteur de niveau, le tuyau étant fixé à la prise de pression.

Selon une réalisation électrique, le dispositif peut comprendre une électrovanne fixée à la prise de pression.

Ainsi, un moyen mécanique ou électrique vient obturer la prise de pression à la fin du remplissage. Il en résulte une augmentation de la pression dans la chambre de commande qui induit une translation de la tige creuse. La première tête coupe la communication hydraulique entre la chambre d'entrée et la chambre intermédiaire. Le remplissage sous pression est alors interrompu.

L'invention et ses avantages apparaîtront avec plus de détails dans le cadre de la description qui suit avec des exemples de réalisation donnés à titre illustratif en référence aux figures annexées qui représentent :
- la figure 1, une embase de remplissage par gravité du dispositif de remplissage,
- la figure 2, une embase de remplissage sous pression de ce dispositif,
- la figure 3, une première variante d'un moyen de solidarisation du dispositif,
- la figure 4, une deuxième variante d'un moyen de solidarisation du dispositif,
- la figure 5, une coupe longitudinale d'un dispositif de remplissage selon un premier mode de réalisation,
- la figure 6, une coupe transversale d'un dispositif de remplissage selon un premier mode de réalisation,
- la figure 7, une coupe d'une embase de remplissage sous pression d'un dispositif selon un deuxième mode de réalisation, et,
- les figures 8 et 9 des schémas explicitant le fonctionnement du dispositif indépendamment du mode de réalisation.

Les éléments présents dans plusieurs figures distinctes sont affectés d'une seule et même référence.

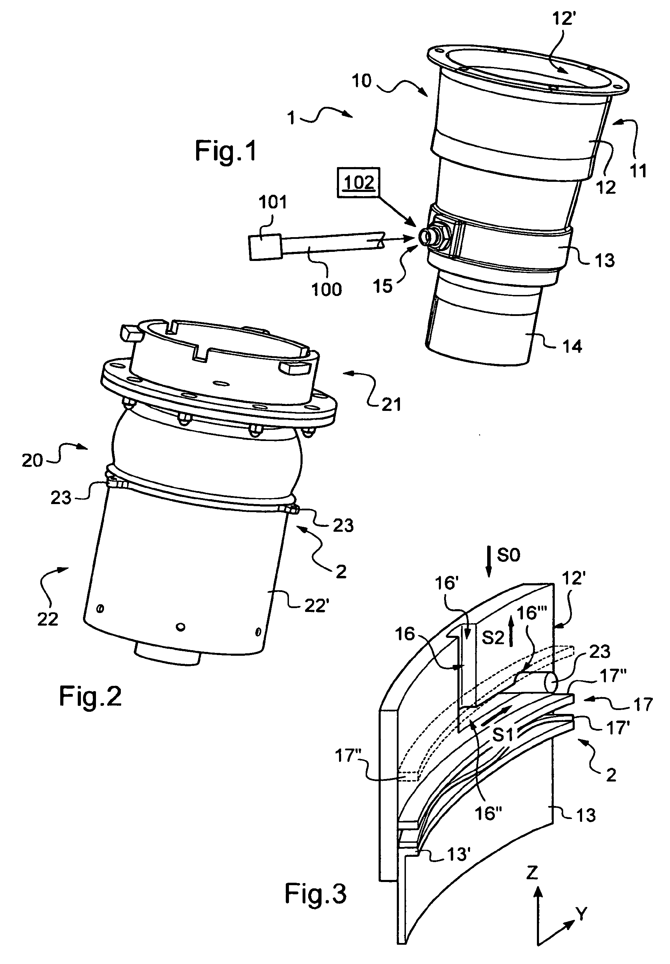

La figure 1 présente une embase de remplissage par gravité 10 du dispositif de remplissage 1.

Cette embase de remplissage par gravité comprend une canalisation 11 creuse pourvue éventuellement d'une portion supérieure 12 et d'une portion inférieure 13 et d'une crépine 14. la portion supérieure 12 peut être réalisée selon la norme STANAG 3212.

La portion inférieure 13 est en outre munie d'une prise de pression 15 apte à être solidarisée à un tuyau 100 équipé d'un détecteur de niveau 101, par exemple de type valve à billes, ou encore à une électrovanne 102. Une telle électrovanne est éventuellement commandée selon une logique prédéterminée par un processeur par exemple.

Ainsi, selon la variante, lorsque le réservoir à remplir a atteint un niveau prédéterminé, la prise de pression 15 est obturée.

Par ailleurs, la face interne 12' de la canalisation 11 délimite un espace interne apte à accueillir une embase de remplissage sous pression.

La figure 2 présente une telle embase de remplissage sous pression 20 munie d'un corps 22 prolongé par un raccord de connexion 21, conforme aux normes en vigueur afin d'être raccordé à un volant d'accrochage en appliquant un premier couple de serrage.

Le dispositif 1 comprend alors un moyen de connexion 2 pour solidariser l'embase de remplissage sous pression 20 à l'intérieur de l'embase par gravité 10, en appliquant un deuxième couple de serrage supérieur au premier couple de serrage. Ainsi, lorsque l'opérateur effectuant le remplissage sous pression déconnecte le volant d'accrochage du raccord de connexion, il applique le premier couple de serrage sur ce volant. Le premier couple de serrage étant inférieur au deuxième couple de serrage, l'opérateur ne risque alors pas de désolidariser l'embase de remplissage sous pression de l'embase de remplissage par gravité.

Par suite, le moyen de connexion 2 comprend au moins une baïonnette 23 disposée sur la face externe 22' du corps 22 de l'embase de remplissage sous pression, par exemple trois baïonnettes réparties de manière équidistante sur cette face externe 22'. Il est à noter que cette face externe est en vis-à-vis de la face interne 12' de l'embase de remplissage par gravité 10 lorsque l'embase de remplissage sous pression 20 est agencée dans l'embase de remplissage par gravité 10.

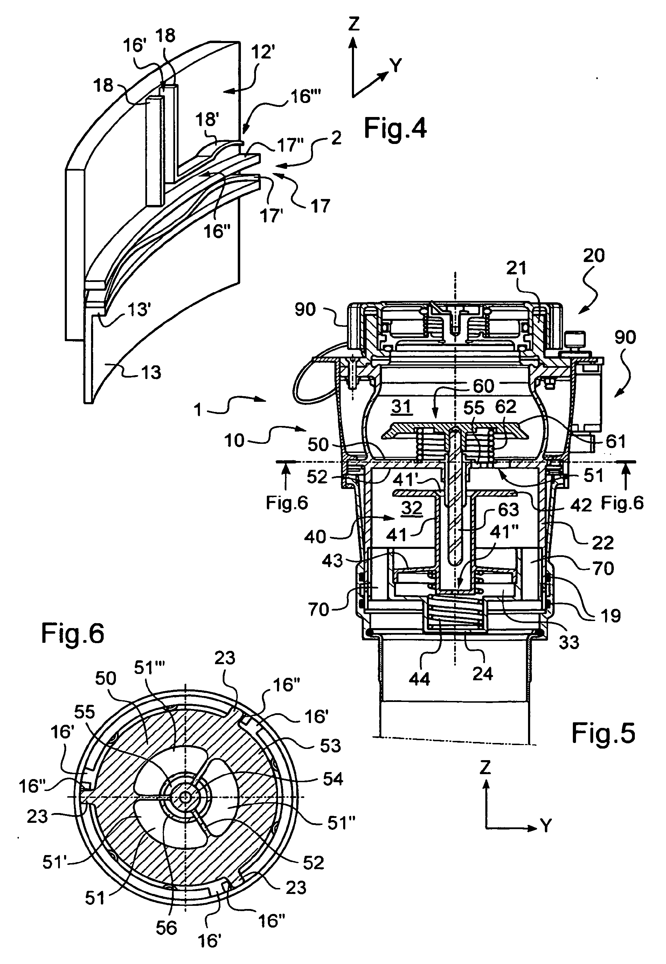

Les figures 3 et 4 présentent une première et une deuxième variantes du moyen de solidarisation 2.

Indépendamment de la variante, le moyen de solidarisation 2 comprend une gorge 16 pour chaque baïonnette 23 et un moyen de pression élastique 17 apte à plaquer chaque baïonnette 23 dans une zone de retenue 16"' de la gorge 16.

Plus précisément, chaque gorge 16 a une forme de L en comprenant une gorge principale 16' s'étendant sensiblement selon une direction longitudinale Z et une gorge secondaire 16" s'étendant sensiblement selon une direction transversale Y, la gorge secondaire 16" étant pourvue d'une zone de retenue 16"'.

Ainsi, l'opérateur positionne chaque baïonnette 23 dans une gorge principale 16' et exerce un effort longitudinal selon un premier sens S0 pour enfoncer l'embase de remplissage sous pression 20 dans l'embase de remplissage par gravité. Ensuite, cet opérateur fait effectuer une rotation S1 à l'embase de remplissage sous pression 20 pour positionner chaque baïonnette 23 dans une zone de retenue 16"'. Le moyen de pression élastique 17 pousse alors chaque baïonnette 23 selon un deuxième sens S2 opposé au premier sens pour maintenir chaque baïonnette dans la zone de retenue 16"' associée.

Selon la première variante de la figure 3, la gorge 16 est usinée dans l'épaisseur de l'embase de remplissage par gravité 10.

Le moyen de pression élastique 17 comprend alors un organe élastique en appui sur un épaulement de l'embase de remplissage par gravité 10. Par exemple, l'organe élastique est un ressort ou encore une lame ressort 17' en appui sur une arête 13' de la portion inférieure 13 qui remplit le rôle d'épaulement. Cet organe élastique coopère alors avec une rondelle 17" apte à pousser chaque baïonnette 23.

Plus précisément, une première zone de chaque baïonnette 23 est disposée dans la gorge 16, alors qu'une deuxième zone saillant de cette baïonnette 23 coopère avec la rondelle 17".

On note qu'au repos, à savoir lorsque l'embase de remplissage sous pression 20 n'est pas agencée dans l'embase de remplissage par gravité 10, la rondelle 17" peut être au dessus de la gorge secondaire, à savoir dans la position représentée en pointillés sur la figure 3.

Selon la variante de la figure 4, la gorge 16 comprend une gorge principale 16' délimitée par des moyens de guidage en élévation 18 et une gorge secondaire 16" délimitée par une butée 18' et la rondelle 17" du moyen de pression élastique 17. Chaque gorge principale 16' présente l'avantage de guider chaque baïonnette 23 mais peut éventuellement être omise.

La figure 5 présente une coupe longitudinale d'un dispositif de remplissage 1 selon un premier mode de réalisation.

Ce dispositif 1 comprend donc une embase de remplissage par gravité 10 dans laquelle est fixée de manière réversible une embase de remplissage sous pression 20.

Si un opérateur souhaite effectuer un remplissage par gravité, il désolidarise donc l'embase de remplissage sous pression 20 de l'embase de remplissage par gravité 10, et effectue le remplissage. Optionnellement, il est possible de prévoir un câble pour accrocher l'embase de remplissage sous pression 20 à l'embase de remplissage par gravité 10, ou à une structure dédiée afin que ladite embase de remplissage sous pression ne soit pas égarée durant l'opération de remplissage par gravité.

L'embase de remplissage sous pression 20 comprend donc un corps 22 ayant une extrémité prolongée par un raccord de connexion 21 et une autre extrémité équipée d'un siège 24.

Le dispositif 1 peut alors être équipé d'un bouchon 90 apte à obturer le raccord de connexion 21.

Par ailleurs, à la suite du raccord de connexion 21, le corps 22 délimite une chambre d'entrée 31 puis une chambre intermédiaire 32, cette chambre intermédiaire 32 débouchant sur un canal de remplissage 70 annulaire traversant le siège 24 pour diriger un fluide vers la crépine 14 de l'embase de remplissage par gravité 10. On comprend qu'en l'absence d'une telle crépine 14, le fluide sera dirigé directement vers le réservoir à remplir..

La chambre d'entrée 31 est alors séparée de la chambre intermédiaire 32 par une paroi fixe 50. Le corps s'étendant selon une direction longitudinale Z, la paroi est disposée selon une direction transversale Y. De plus, la paroi fixe 50 comprend un orifice de remplissage 51 pour permettre l'écoulement d'un fluide provenant d'une source d'approvisionnement de la chambre d'entrée 31 vers la chambre intermédiaire 32.

En outre, l'embase de remplissage sous pression 20 possède un moyen de commande 40 mécanique apte à empêcher cet écoulement lorsque le réservoir à remplir a atteint le niveau de remplissage souhaité. Ainsi, lorsque la prise de pression 15 est obturée, on verra que le moyen de commande 40 obture l'orifice de remplissage pour mettre fin au remplissage sous pression.

Le moyen de commande 40 inclut une chambre de commande 33 disposée entre la chambre intermédiaire 32, le siège 24 et le canal de remplissage 70.

De plus, le moyen de commande 40 comporte une tige creuse 41 s'étendant d'une première extrémité munie d'une première tête 42 vers une deuxième extrémité munie d'une deuxième tête 43, la tige creuse mettant en permanence en relation la chambre d'entrée 31 et la chambre de commande 33 en coopérant avec un premier orifice de commande 55 ménagé dans la paroi fixe 50.

La tige creuse 41 est mobile dans les chambres intermédiaire 32 et de commande 33. La première tête 42 coulisse alors dans la chambre intermédiaire 32 alors que la deuxième tête 43 délimite la chambre de commande 33 par rapport à la chambre intermédiaire 32.

La première tête 42 comporte un premier plateau qui obture l'orifice de remplissage 51 lorsque le moyen de commande 40 requiert l'arrêt d'un remplissage sous pression. De même, la deuxième tête 43 comporte un deuxième plateau séparant hydrauliquement la chambre intermédiaire 32 de la chambre de commande 33 afin qu'un fluide ne puisse pas passer de la chambre intermédiaire 32 vers la chambre de commande 33 de manière directe, à savoir sans transiter par la tige creuse 41.

En effet, la première tête 42 possède un deuxième orifice de commande 41' coopérant avec le premier orifice de commande 55. Plus précisément, lorsque la première tête 42 est plaquée contre la paroi 50, la première tête 42 obture l'orifice de remplissage 51, le premier orifice de commande 55 demeurant en coïncidence avec le deuxième orifice de commande 41'. Par contre, lorsque la première tête 42 n'est pas plaquée contre la paroi 50, la première tête 42 n'obture plus l'orifice de remplissage, le premier orifice de commande demeurant en coïncidence avec le deuxième orifice de commande via la chambre intermédiaire 32 comme le montre la figure 5 notamment.

Pour mettre en relation les chambres d'entrée 31 et de commande 33, la deuxième tête 43 est munie d'un troisième orifice de commande 41".

La chambre de commande 33 est alors toujours reliée à la chambre d'entrée 31 via notamment le premier orifice de commande 55, le deuxième orifice de commande 41', la tige creuse 41, le troisième orifice de commande 41", et le cas échéant la chambre intermédiaire 32.

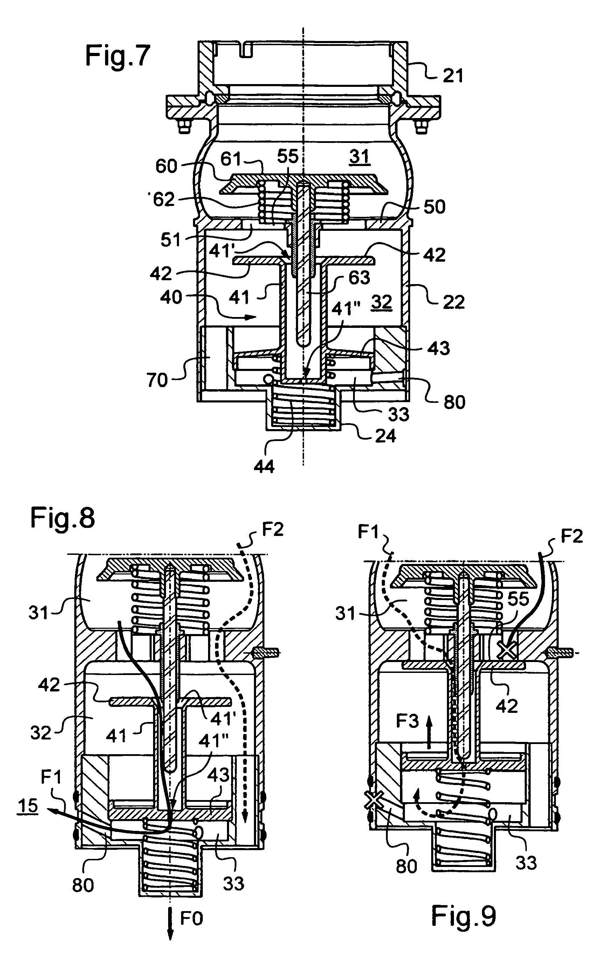

De plus, cette chambre de commande 33 débouche sur l'extérieur du corps 22 par un canal de fuite 80 visible sur les figures 7 à 9, ce canal de fuite 80 étant en coïncidence avec la prise de pression 15 lorsque l'embase de remplissage sous pression 20 est disposée dans l'embase de remplissage par gravité 10. On note de plus que des joints toriques 19 peuvent être disposés de part et d'autre de l'ensemble canal de fuite 80 / prise de pression 15.

Enfin, le moyen de commande 40 comprend un moyen élastique de rappel 44, à savoir un ressort agencé entre la deuxième tête 43 et le siège 24 de l'embase de remplissage sous pression 20.

En référence à la figure 6, la paroi fixe 50 comporte un orifice de remplissage 51 muni d'une pluralité de lumières 51', 51", 51''', trois lumières réparties de manière équidistante entre une périphérie externe 53 et une périphérie interne 54 de cette paroi. La paroi 50 comprend alors un bras de liaison 52 entre deux lumières 51', 51", 51''' adjacentes de l'orifice de remplissage 51, chaque bras s'étendant radialement pour relier la périphérie externe 53 de la paroi fixe 50 à sa périphérie interne 54.

De plus, cette paroi fixe comporte un premier orifice de commande 55 apte à coopérer avec le deuxième orifice de commande 41' de la tige creuse 41.

Selon le premier mode de réalisation de la figure 6, la paroi fixe 50 comprend un anneau 56 séparant l'orifice de remplissage 51 et le premier orifice de commande 55.

Selon le deuxième mode de réalisation présenté sur la figure 7, l'orifice de remplissage 51 et le premier orifice de commande 55 ne sont pas physiquement séparés. Le premier orifice de commande 55 correspond alors à la portion de l'orifice de remplissage 51 qui n'est pas obturé par la première tête 42 lorsque cette première tête est appuyée contre la paroi fixe 50.

Les figures 5 et 7 présentent de plus un clapet 60 requis par les normes en vigueur et apte à coopérer avec le volant de remplissage. Ce clapet 60 comprend alors un plateau 61 agencé dans la chambre d'entrée 31, ce plateau 61 étant monté sur un pied 63 traversant la périphérie interne de la paroi fixe 50 et s'étendant dans la chambre intermédiaire 32 pour guider une translation éventuelle du plateau 61. On note que pour optimiser les dimensions du dispositif 1, le pied pénètre partiellement à l'intérieur de la tige creuse 41, en n'ayant cependant aucune interaction avec cette tige creuse 41.

De plus, le clapet 60 comprend un ressort 62 disposé entre la paroi fixe 50 et le plateau 61. Ce ressort 62 repose par exemple sur les bras de liaison 52 de la paroi fixe 50.

Les figures 8 et 9 montrent des schémas explicitant le fonctionnement du dispositif indépendamment du mode de réalisation.

En référence à la figure 8, durant un remplissage sous pression, une source d'approvisionnement fait parvenir un fluide dans la chambre d'entrée 31. Le fluide exerce alors une pression sur la première tête 42 induisant une translation de la tige creuse 41 selon la flèche F0. Le volume de la chambre intermédiaire 32 est ainsi maximisé alors que le volume de la chambre de commande est minimisé.

Conformément à un premier cheminement représenté par une première ligne continue F1, une première partie du fluide provenant de la chambre d'entrée 31 pénètre dans la tige creuse 41 par le deuxième orifice de commande 41', s'échappe de cette tige creuse 41 par le troisième orifice de commande 41" puis se déverse dans la chambre de commande 33.

Le réservoir n'étant pas plein, la prise de pression 15 est ouverte ce qui permet au fluide de sortir de la chambre de commande par le canal de fuite 80, avant de rejoindre le réservoir via la prise de pression 15. Le débit de fuite du fluide au travers du canal de fuite 80 maintient la pression du fluide dans la chambre de commande 33 à un niveau inférieur à la pression exercée par le fluide sur la première tête 42. Ainsi, la chambre de commande 33 ne peut pas plaquer cette première tête 42 contre l'orifice de remplissage 51.

Dès lors, lors du remplissage, une deuxième partie du fluide provenant de la chambre d'entrée 31 suit un deuxième cheminement représenté par une deuxième ligne continue F2. Cette deuxième partie du fluide traverse alors l'orifice de remplissage 51 non obturé par la première tête 42, passe ensuite dans la chambre intermédiaire 32 puis dans le canal de remplissage 70 avant de se déverser dans un réservoir, éventuellement en étant préalablement filtrée par une crépine 14 de l'embase de remplissage par gravité 10.

En référence à la figure 9, lorsque le réservoir atteint un niveau prédéterminé, un détecteur de niveau mécanique ou une électrovanne obture la prise de pression 15. Le canal de fuite 80 est alors obturé.

Dès lors, la chambre de commande 33 étant toujours alimentée par le fluide provenant de la chambre d'entrée et suivant le premier cheminement F1, la pression augmente dans la chambre de commande 33. Il en résulte une translation selon la flèche F3 de la tige creuse 41 du moyen de commande 40, la première tête venant obturer l'orifice de remplissage 51.

Le fluide suivant le deuxième cheminement F2 ne pénètre plus dans la chambre intermédiaire 32 ce qui met fin au remplissage.

On note que lorsque le niveau baisse dans le réservoir le détecteur de niveau ou l'électrovanne libère la prise de pression. Le fluide peut alors s'échapper de la chambre de commande 33, ce qui permet de faire baisser la pression dans cette chambre de commande. Ainsi, la mise en pression de la chambre d'entrée lors d'un futur remplissage sous pression induira une translation de la tige creuse 41 selon la flèche F0.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent, le cadre de la présente invention, étant uniquement défini par le texte des revendications.

## Revendications

1. Dispositif (1) de remplissage pour remplir un réservoir indifféremment par gravité ou sous pression muni d'une embase de remplissage par gravité (10) comportant une canalisation (11) creuse,
**caractérisé en ce que** l'embase de remplissage par gravité (10) dudit dispositif comporte une prise de pression (15), ledit dispositif comportant une embase de remplissage sous pression (20) insérée et fixée de manière réversible dans l'embase de remplissage par gravité (10), ladite embase de remplissage sous pression (20) comportant un orifice de remplissage et un moyen de commande (40) de fin de remplissage qui coopère avec ladite prise de pression (15) lorsque ladite embase de remplissage sous pression (20) est fixée à ladite embase de remplissage par gravité (10), ledit moyen de commande (40) de fin de remplissage obturant l'orifice de remplissage pour mettre fin au remplissage sous pression lorsque la prise de pression est obturée.

2. Dispositif de remplissage selon la revendication 1,
**caractérisé en ce que**, ladite embase de remplissage sous pression (20) comportant un raccord de connexion (21) apte à être verrouillé à un volant d'accrochage en appliquant un premier couple de serrage, un moyen de solidarisation (2) du dispositif (1) comporte au moins une baïonnette (23) qui coopère avec une gorge (16) et un moyen de pression élastique (17) pour fixer de manière réversible ladite embase de remplissage sous pression (20) à ladite embase de remplissage par gravité (10) en appliquant un second couple de serrage supérieur audit premier couple.

3. Dispositif de remplissage selon la revendication 2, **caractérisé en ce que** ladite baïonnette (23) étant solidarisée à une face externe (22') de ladite embase de remplissage sous pression (20), ladite gorge (16) est ménagée sur une face interne (12') de ladite embase de remplissage par gravité (10) en regard de ladite face externe (22'), ledit moyen de pression élastique (17) bloquant ladite baïonnette (23) dans une zone de retenue (16"') de ladite gorge (16).

4. Dispositif de remplissage selon l'une quelconque des revendications précédentes,
**caractérisé en ce qu'**il comporte une chambre d'entrée (31) par laquelle un fluide pénètre dans l'embase de remplissage sous pression (20) lors d'une phase de remplissage, ledit dispositif (1) étant pourvu d'une chambre intermédiaire (32) séparée de ladite chambre d'entrée (31) par une paroi fixe (50), ladite paroi fixe (50) comportant un orifice de remplissage (51) reliant ladite chambre d'entrée (31) et ladite chambre intermédiaire (32), ladite chambre intermédiaire (32) étant munie d'au moins un canal de remplissage (70) apte à diriger ledit fluide vers un réservoir, ladite embase de remplissage sous pression (20) étant pourvue d'un moyen de commande (40) pour obturer ledit orifice de remplissage (51) à l'issue d'une phase de remplissage sous pression.

5. Dispositif de remplissage selon la revendication 1,
**caractérisé en ce que** ledit moyen de commande (40) comporte une chambre de commande (33) liée en permanence avec ladite chambre d'entrée (31) via un premier orifice de commande (55) ménagé dans ladite paroi fixe (50) qui coopère avec une tige (41) creuse mobile dans ladite chambre intermédiaire (32).

6. Dispositif de remplissage selon la revendication 5, **caractérisé en ce qu'**une première extrémité de ladite tige (41) creuse est pourvue d'une première tête (42) et **en ce qu'**une deuxième extrémité de ladite tige (41) creuse est munie d'une deuxième tête (43), ladite deuxième tête (43) séparant hydrauliquement ladite chambre de commande (33) de ladite chambre intermédiaire (32), ladite première tête (42) pouvant obturer ledit orifice de remplissage (51) et ayant un deuxième orifice de commande (41') coopérant avec ledit premier orifice de commande (55) pour permettre une liaison hydraulique permanente entre ladite chambre d'entrée (31) et ladite tige (41) creuse, ladite deuxième tête (42) ayant un troisième orifice de commande (41") mettant en relation ladite tige (41) creuse et ladite chambre de commande (33).

7. Dispositif de remplissage selon la revendication 6,
**caractérisé en ce que** ladite embase de remplissage sous pression (20) comprend un moyen élastique de rappel (44) tendant à plaquer ladite première tête (42) contre la paroi fixe (50) pour obturer l'orifice de remplissage (51).

8. Dispositif de remplissage selon l'une quelconque des revendications 5 à 7,
**caractérisé en ce que** ladite embase de remplissage sous pression (20) comprend un canal de fuite (80) apte à relier hydrauliquement ladite chambre de commande (33) à une prise de pression (15) de ladite embase de remplissage par gravité (10) lorsque ladite embase de remplissage sous pression (20) est fixée à ladite embase de remplissage par gravité (10).

9. Dispositif de remplissage selon la revendication 1,
**caractérisé en ce qu'**il comprend un tuyau (100) débouchant sur un détecteur de niveau (101), ledit tuyau (100) étant fixé à ladite prise de pression (15).

10. Dispositif de remplissage selon la revendication 1,
**caractérisé en ce qu'**il comprend une électrovanne (102) fixée à ladite prise de pression (15).

## Patentansprüche

1. Vorrichtung (1) zur Betankung, um einen Tank mittels Schwerkraft oder unter Druck zu füllen, die einen Schwerkraftbetankungsstutzen (10) mit einem hohlen Rohr (11) aufweist,
**dadurch gekennzeichnet, dass** der Schwerkraftbetankungsstutzen (10) der Vorrichtung eine Druckabnahmestelle (15) aufweist, und die Vorrichtung einen Druckbefüllungsstutzen (20) aufweist, der reversibel in dem Schwerkraftbefüllungsstutzen (10) eingeführt und befestigt ist, wobei der Druckbefüllungsstutzen (20) eine Befüllungsöffnung aufweist und ein Mittel (40) zur Steuerung der Beendigung der Befüllung, das mit der Druckabnahmestelle (15) zusammenwirkt, wenn der Druckbefüllungsstutzen (20) an dem Schwerkraftbefüllungsstutzen (10) befestigt ist, wobei das Mittel (40) zur Steuerung der Beendigung des Befüllens die Befüllungsöffnung schließt, um die Druckbefüllung zu beenden, wenn die Druckabnahmestelle geschlossen ist.

2. Betankungsvorrichtung nach Anspruch 1,
**dadurch gekennzeichnet, dass** der Druckbefüllungsstutzen (20) einen Anschlussstutzen (21) aufweist, der auf einem Einrastrad verriegelbar ist durch Beaufschlagung mit einem ersten Spann-Drehmoment, wobei ein Mittel (2) zur Befestigung der Vorrichtung (1) mindestens eine Bajonettverriegelung (23), die mit einer Nut (16) zusammenwirkt, und ein elastisches Druckmittel (17) zur lösbaren Befestigung des Druckbefüllungsstutzens (20) an dem Schwerkraftbefüllungsstutzen (10), indem ein zweites Spann-Drehmoment angewendet wird, welches größer ist als das erste Drehmoment, aufweist.

3. Betankungsvorrichtung nach Anspruch 2,
**dadurch gekennzeichnet, dass** die Bajonettverriegelung (23) an einer Außenfläche (22') des Druckbefüllungsstutzens (20) befestigt ist, wobei die Nut (16) auf einer Innenfläche (12') des Schwerkraftbefüllungsstutzens (10) gegenüber der Außenfläche (22') angeordnet ist, wobei das elastische Druckmittel (17) die Bajonettverriegelung (23) in einem Rückhaltebereich (16"') der Nut blockiert.

4. Betankungsvorrichtung nach einem der vorstehenden Ansprüche,
**dadurch gekennzeichnet, dass** sie eine Eintrittskammer (31) aufweist, durch die ein Fluid in den Druckbefüllungsstutzen (20) während einer Befüllungsphase eintritt, wobei die Vorrichtung (1) mit einer Zwischenkammer (32) versehen ist, die von der Eintrittskammer (31) durch eine feste Wand (50) getrennt ist, wobei die feste Wand (50) eine Befüllungsöffnung (51) aufweist, die die Eintrittskammer (31) und die Zwischenkammer (32) verbindet, wobei die Zwischenkammer (32) mit mindestens einem Befüllungskanal (70) versehen ist, der das Fluid in einen Tank leiten kann, wobei der Druckbefüllungsstutzen (20) mit einem Steuermittel (40) versehen ist zum Schließen der Befüllungsöffnung (51) am Ende einer Druckbefüllungsphase.

5. Betankungsvorrichtung nach Anspruch 1,
**dadurch gekennzeichnet, dass** das Steuermittel (40) eine Steuerkammer (33) aufweist, die permanent mit der Eintrittskammer (31) über eine erste Steueröffnung (55) verbunden ist, die in die feste Wand (50) eingearbeitet ist, die mit einer beweglichen hohlen Stange (41) in der Zwischenkammer (32) zusammenwirkt.

6. Betankungsvorrichtung nach Anspruch 5,
**dadurch gekennzeichnet, dass** ein erstes Ende der hohlen Stange (41) mit einem ersten Kopf (42) versehen ist, und dadurch, dass ein zweites Ende der hohlen Stange (41) mit einem zweiten Kopf (43) versehen ist, wobei der zweite Kopf (43) die Steuerkammer (33) von der Zwischenkammer (32) hydraulisch trennt, wobei der erste Kopf (42) die Befüllungsöffnung (51) verschließen kann, und eine zweite Steueröffnung (41') aufweist, die mit der ersten Steueröffnung (55) zusammenwirkt, um eine permanente hydraulische Verbindung zwischen der Eintrittskammer (31) und der hohlen Stange (41) zu ermöglichen, wobei der zweite Kopf (42) eine dritte Steueröffnung (41") aufweist, die die hohle Stange (41) und die Steuerkammer (33) in Beziehung zueinander setzt.

7. Betankungsvorrichtung nach Anspruch 6,
**dadurch gekennzeichnet, dass** der Druckbetankungsstutzen (20) ein elastisches Rückholmittel (44) aufweist, welches den ersten Kopf (42) gegen die feste Wand (50) drückt, um die Befüllungsöffnung (51) zu verschließen.

8. Betankungsvorrichtung nach einem der Ansprüche 5 bis 7,
**dadurch gekennzeichnet, dass** der Druckbetankungsstutzen (20) einen Leckagekanal (80) aufweist, der die Steuerkammer (33) mit einer Druckabnahmestelle (15) des Schwerkraftbefüllungsstutzens (10) verbinden kann, wenn der Druckbefüllungsstutzen (20) an dem Schwerkraftbefüllungsstutzen (10) befestigt ist.

9. Betankungsvorrichtung nach Anspruch 1,
**dadurch gekennzeichnet, dass** sie ein Rohr (100) aufweist, welches auf einem Pegeldetektor (101) mündet, wobei das Rohr (100) an der Druckabnahmestelle (15) befestigt ist.

10. Betankungsvorrichtung nach Anspruch 1,
**dadurch gekennzeichnet, dass** sie ein elektromagnetisches Ventil (102) aufweist, das an der Druckabnahmestelle (15) befestigt ist.

## Claims

1. Filling device (1) for filling a tank equally well by gravity or under pressure provided with a gravity filling socket (10) comprising a hollow conduit (11),
**characterised in that** the gravity filling socket (10) of said device comprises a pressure connector (15), said device comprising a pressure filling socket (20) inserted in the gravity filling socket (10) and reversibly fastened therein, said pressure filling socket (20) comprising a filling orifice and an end-of-filling control means (40) which co-operates with said pressure connector (15) when said pressure filling socket (20) is fastened to said gravity filling socket (10), said end-of-filling control means (40) closing the filling orifice to terminate the filling under pressure when the pressure connector is closed.

2. Filling device according to Claim 1,
**characterised in that** said pressure filling socket (20) comprises a connection coupling (21) suitable for being locked to a catch wheel by applying a first clamping torque, and a securing means (2) of the device (1) comprises at least one bayonet (23) which co-operates with a groove (16) and a flexible pressure means (17) for reversibly fastening said pressure filling socket (20) to said gravity filling socket (10) by applying a second clamping torque greater than said first torque.

3. Filling device according to Claim 2,
**characterised in that** said bayonet (23) is secured to an outside face (22') of said pressure filling socket (20), said groove (16) is provided in an inside face (12') of said gravity filling socket (10) facing said outside face (22'), said flexible pressure means (17) blocking said bayonet (23) in a retaining zone (16'") of said groove (16).

4. Filling device according to any one of the preceding claims,
**characterised in that** it comprises an inlet chamber (31) through which a fluid penetrates into the pressure filling socket (20) during a filling stage, said device (1) being provided with an intermediate chamber (32) separated from said inlet chamber (31) by a stationary wall (50), said stationary wall (50) comprising a filling orifice (51) connecting said inlet chamber (31) to said intermediate chamber (32), said intermediate chamber (32) being provided with at least one filling channel (70) suitable for directing said fluid towards a tank, said pressure filling socket (20) being provided with a control means (40) for closing said filling orifice (51) at the end of a pressure filling stage.

5. Filling device according to Claim 1,
**characterised in that** said control means (40) comprises a control chamber (33) permanently connected with said inlet chamber (31) via a first control orifice (55) provided in said stationary wall (50) which co-operates with a hollow rod (41) movable in said intermediate chamber (32).

6. Filling device according to Claim 5,
**characterised in that** a first end of said hollow rod (41) is provided with a first head (42) and **in that** a second end of said hollow rod (41) is provided with a second head (43), said second head (43) hydraulically separating said control chamber (33) from said intermediate chamber (32), said first head (42) being capable of closing said filling orifice (51) and having a second control orifice (41') co-operating with said first control orifice (55) to permit a permanent hydraulic connection between said inlet chamber (31) and said hollow rod (41), said second head (42) having a third control orifice (41") putting said hollow rod (41) into communication with said control chamber (33).

7. Filling device according to Claim 6,
**characterised in that** said pressure filling socket (20) comprises a flexible return means (44) urging said first head (42) to be pressed against the stationary wall (50) so as to close the filling orifice (51).

8. Filling device according to any one of Claims 5 to 7,
**characterised in that** said pressure filling socket (20) comprises an escape channel (80) suitable for hydraulically connecting said control chamber (33) to a pressure connector (15) of said gravity filling socket (10) when said pressure filling socket (20) is fastened to said gravity filling socket (10) .

9. Filling device according to Claim 1,
**characterised in that** it comprises a pipe (100) opening out into a level detector (101), said pipe (100) being fastened to said pressure connector (15).

10. Filling device according to Claim 1,
**characterised in that** it comprises a solenoid valve (102) fastened to said pressure connector (15).
